# FASCICULE DE BREVET EUROPEEN

(11) **EP 3 844 006 B1**
(45) Date de publication et mention de la délivrance du brevet: **30.11.2022**
(21) Numéro de dépôt: 19753146.0
(22) Date de dépôt: 09.07.2019
(51) Int. Cl.: B60H 1/00, B60H 1/34

(54) **HABITACLE DE VÉHICULE AUTOMOBILE COMPRENANT UN SYSTÈME DE FIXATION DE CONDUIT D'AIR DANS UN SYSTEME DE VENTILATION**
FAHRZEUGINNENRAUM MIT EINEM SYSTEM ZUR BEFESTIGUNG EINES LUFTKANALS IN EINEM BELÜFTUNGSSYSTEM
AUTOMOBILE INTERIOR COMPRISING A SYSTEM FOR ATTACHING AN AIR DUCT IN A VENTILATION SYSTEM

(30) Priorité: 28.08.2018 FR 1857702
(43) Date de publication de la demande: 07.07.2021
(73) Titulaire: PSA Automobiles SA, 78300 Poissy (FR)
(72) Inventeur: MITOUART, Jean Guy, 77310 PRINGY (FR); BOUCHENOIRE, Jerome, 78180 MONTIGNY LE BRETONNEUX (FR)
(86) Numéro de dépôt international: PCT/FR2019/051705
(87) Numéro de publication internationale: WO 2020/043963

(56) Documents cités:
- WO-A1-02/096684
- FR-A1- 2 892 976
- FR-A1- 2 980 402
- FR-A1- 3 006 426
- JP-A- 2002 144 845

## Description

L'invention concerne, de façon générale, le domaine des systèmes de fixation des conduits d'air dans des système de ventilation de véhicules automobiles.

L'invention porte plus particulièrement sur une platine intégrant les interfaces nécessaires au maintien des conduits d'air d'un système de ventilation, en particulier les conduits d'air transitant à l'intérieur d'une console du véhicule automobile. De tels conduits d'air de console ne projettent pas directement d'air au rang 2 du véhicule, c'est-à-dire sur les passagers installés à l'arrière de l'habitacle du véhicule. De tels conduits d'air sont sciemment raccourcis car ils ne peuvent pas passer sur toute la longueur de la console en raison de la présence de compartiments de rangement sur l'arrière de ladite console. Toutefois, les conduits d'air assurent une prestation de climatisation et de ventilation pour les passagers du rang 2.

Il est entendu que par « console », comme cela est connu, on désigne un volume central entre les deux sièges avant de l'habitacle du véhicule, dans la continuité de la planche de bord. La console embarque tout ou partie des équipements suivants : le levier de vitesse, des portes gobelets, des actionneurs de lève-vitres, un actionneur de condamnation des portières, des accoudoirs conducteur et passager avant, des prises USB, etc.

Ainsi, de manière connue, un véhicule automobile comporte un plancher comprenant une tôle présentant entre les deux sièges avant un bossage longitudinal, formant en-dessous un tunnel permettant de passer notamment un tube du système d'échappement. Le tunnel est recouvert par une console centrale ajustée entre les deux sièges avant, réalisant différentes fonctions. Le volume sous la console centrale est généralement utilisé pour passer des faisceaux de fils électriques reliant l'avant et l'arrière du véhicule. Les faisceaux de fils sont fixés à la carrosserie par des dispositifs d'accrochage, afin d'assurer un positionnement suffisamment précis évitant des contacts avec d'autres éléments pouvant entraîner des usures et des défaillances, et d'éviter des vibrations et des bruits. La console centrale est fixée sur un plancher de l'habitacle et comporte une platine présentant une face principale fixée sur le plancher supportant des faisceaux de fils électriques, ladite platine comportant sur le dessus de sa face principale des dispositifs d'accrochage des faisceaux de fils électriques, et comportant sur un côté un prolongement formant un capot recouvrant les boîtiers électroniques. L'ajout de la platine au niveau des interfaces des boîtes de vitesse mécanique du véhicule permet ainsi de remplacer ladite boîte de vitesse et de jouer le même rôle en fixant les faisceaux de fils et, de protéger le boîtier électronique de commande de coussins gonflables de sécurité, appelés « airbags » en anglais.

Aujourd'hui, pour améliorer le confort des passagers à l'arrière d'un véhicule, une ventilation au niveau des pieds desdits passagers à l'arrière est mise en place dans certains véhicules automobiles. L'installation de cette ventilation au niveau des pieds des passagers à l'arrière d'un véhicule nécessite l'utilisation de conduits d'air longs sur le plancher du véhicule, provenant du système de ventilation. Toutefois, l'intégration de batteries sous les sièges à l'avant d'un véhicule réhausse le plancher du véhicule, limitant l'espace sur le plancher et empêchant les conduits d'air longs de transiter sur le plancher. Afin de conserver la ventilation au niveau des pieds des passagers à l'arrière d'un véhicule pour maintenir la qualité de confort des utilisateurs, les conduits d'air longs sont remplacés par des conduits d'air courts qui offrent une prestation similaire et ne diffèrent des conduits d'air longs que par leur transit à l'intérieur de la console plutôt que sur le plancher.

On connaît par le document DE102016101603 un élément d'accrochage de conduits d'un système d'air conditionné d'un véhicule à moteur qui inclut au moins une zone de fixation en forme de U placée entre deux régions opposées connectées l'une à l'autre par la courbe en forme de U de la zone de fixation de base.

Cependant une telle solution présente des inconvénients car la zone de fixation en forme de U nécessite d'avoir un espace suffisamment grand sur le plancher.

Par ailleurs, le document JP 2002 144845 A divulgue également un système de fixation de conduit d'air pour un système de ventilation de véhicule, dans lequel une pièce de fixation formée intégralement avec le conduit permet la fixation du conduit d'air à l'intérieur de la console.

L'invention vise donc à résoudre ces inconvénients en proposant une platine servant de support et de réceptacle de fixation pour les conduits d'air à destination des passagers à l'arrière d'un véhicule.

Pour parvenir à ce résultat, la présente invention propose un habitacle de véhicule automobile comprenant un système de ventilation, suivant les caractéristiques de la revendication 1.

Avantageusement, ladite platine est une pièce unique, rigide et moulée.

Avantageusement, les interfaces de fixation de conduit sont issues de matière de ladite platine.

Selon un mode de réalisation, la forme de l'interface de fixation de conduit d'air est de type oblong.

Selon un mode de réalisation, la forme de l'interface de fixation de conduit d'air est ronde.

De manière avantageuse, le conduit d'air court est rendu solidaire à ladite platine par l'intermédiaire de moyens de solidarisation, lesdits moyens de solidarisation étant constitués de l'un quelconque au moins des moyens de solidarisation suivants : vis, écrou, cheville, attaches, plasti-rivet.

Selon une forme de réalisation, les interfaces de fixation de conduit d'air sont intégrées à la console.

L'invention concerne également un véhicule automobile comprenant un habitacle tel que décrit ci-dessus.

D'autres caractéristiques et avantages de l'invention apparaîtront à la lecture de la description détaillée des modes de réalisation de l'invention, donnés à titre d'exemple uniquement, et en référence aux dessins qui montrent :
- les figures 1 et 2, respectivement une vue en perspective du dessus et du dessous de la platine selon l'invention montée dans un véhicule automobile,
- les figures 3 et 4, une vue de l'intérieur d'une console centrale posée sur un tunnel d'un véhicule comportant cette platine avec le système de fixation du conduit d'air selon l'invention, et
- la figure 5, une vue de la grille de ventilation à l'intérieur de l'habitacle du véhicule.

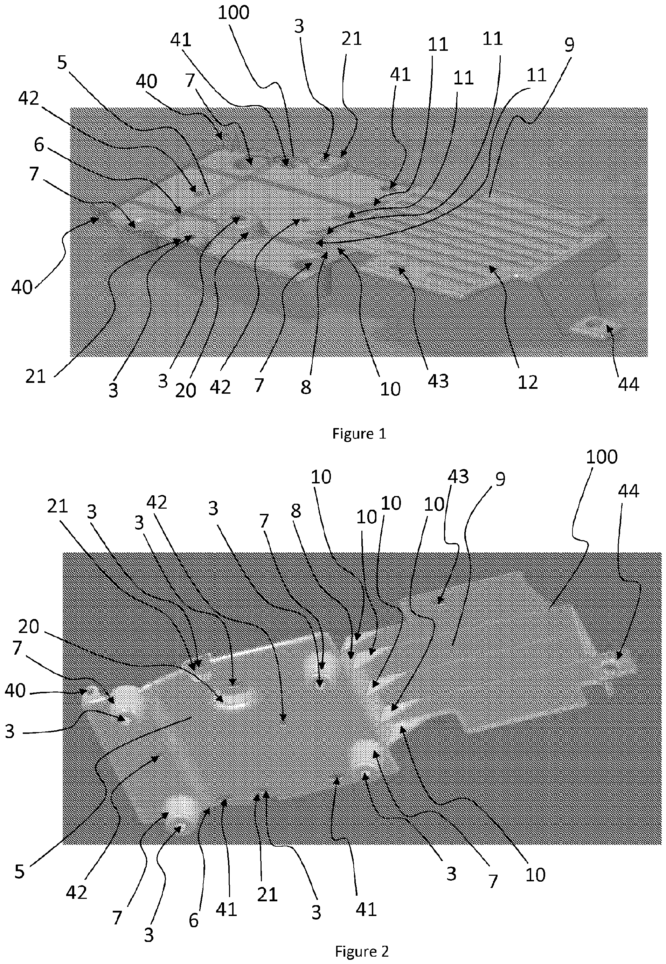

Les figures 1 et 2 représentent une vue en perspective respectivement du dessus et du dessous d'une platine 100. La platine 100 se fixe en lieu et place des interfaces de boîtes de vitesse mécanique sur le tunnel. La platine 100 représentée comporte à l'avant un bossage cylindrique creux 20 s'étendant au-dessus du plan et présente un perçage central 3. La platine 100 comporte sur le dessus deux dispositifs d'accrochage 40 espacés.

Toujours en référence au mode de réalisation des figures 1 et 2, la platine 100 est symétrique par rapport à un axe longitudinal, comportant vers l'avant une face principale 5 plane comprenant à l'arrière un grand côté disposé dans la direction longitudinale du véhicule et à l'avant un petit côté de forme rectangulaire également disposé dans la direction longitudinale du véhicule. Deux bossages verticaux 21 présentant un perçage central 3 s'étendent au-dessus du plan sur les bords du grand côté de la platine 100. Un rebord vertical 6 de petite hauteur délimite le petit côté du grand côté de la face principale 5 en surélevant légèrement l'arrière de la face principale 5 par rapport à l'avant de la face principale 5 d'une hauteur égale à la hauteur de ce rebord. Chaque angle de la face principale 5 comporte en dessous de cette face un bossage cylindrique vertical 7 se terminant par une face d'appui transversale présentant un perçage central 3, prévue pour venir en appui sur le dessus du tunnel du véhicule en surélevant légèrement la face principale 5. La face principale 5 comporte deux dispositifs d'accrochage 41 de type oblong alignés transversalement sur l'un des bords, et deux dispositifs d'accrochage 42 de type rond alignés transversalement disposés sur le milieu, prévus pour fixer des faisceaux de fils électriques. En particulier les quatre dispositifs d'accrochage 41 et 42 permettent de recevoir de manière modulaire différents types de faisceaux, correspondant à des variantes de véhicule réalisées sur une même plate-forme. Le côté arrière de la face principale 5 comporte un rebord vertical 8, dont le dessus se prolonge vers l'arrière par un plateau formant un capot 9 présentant une longueur sensiblement égale à celle de la face principale 5. Le capot 9 comporte une partie avant plus étroite correspondant à la largeur du rebord vertical 8, formant de chaque côté une échancrure. Cinq équerres inférieures de renforcement 10 relient le dessous du capot 9 avec la face arrière du rebord vertical 8. Quatre équerres supérieures de renforcement 11 relient le dessus de la face principale 5 avec la face avant du rebord vertical 8. Le capot 9 comporte sur le dessus des rainures longitudinales 12 qui aux extrémités ne débouchent pas. Le capot 9 comporte une partie arrière comprenant un dispositif d'accrochage 43 de type oblong disposé sur le bord du capot 9 opposé au bord de la face principale 5 où sont disposés les deux dispositifs d'accrochage 41. La partie arrière du capot 9 présente à son extrémité un flanc sensiblement vertical se terminant en bas par un rebord horizontal plan formant un dispositif d'accrochage 44 de type oblong. La platine 100 est formée de manière économique par un moulage d'une matière plastique, permettant de réaliser en une seule opération le moulage de l'ensemble des formes.

Dans les figures suivantes, un seul conduit d'air 13 et une seule grille 15 sont représentés afin d'éviter toute surcharge sur les dessins et de faciliter la compréhension des figures. Mais le système de ventilation comprend en réalité deux conduits d'air 13 reliés à deux grilles 15 situées de part et d'autre de la console centrale recouvrant le tunnel, ajustée entre les deux sièges avant du véhicule.

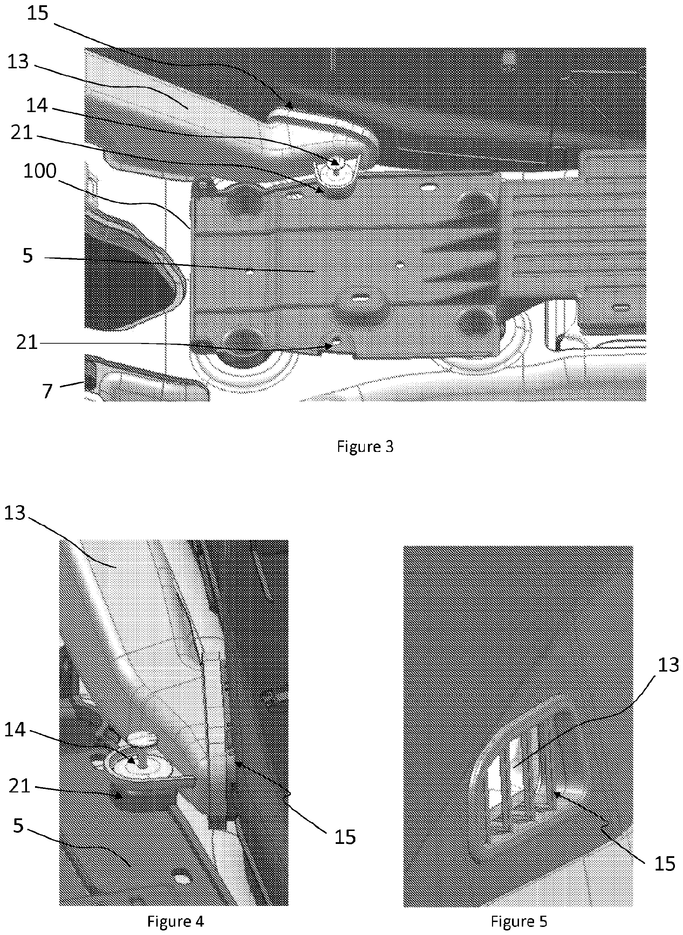

La figure 3 représente le système de fixation de conduit d'air selon l'invention. La platine 100 se positionne en lieu et place des commandes de vitesses mécanique sur les interfaces situées sur le tunnel grâce aux bossages cylindriques verticaux 7 venant en appui sur le dessus du tunnel du véhicule en surélevant légèrement la face principale 5.

La platine 100 intègre en outre les interfaces de fixation nécessaires au maintien des conduits d'air courts 13 le plus près possible de la zone de soufflage du système de ventilation du véhicule. Le conduit d'air 13 se fixe sur l'interface de fixation de la platine 100 selon l'invention et s'accoste sur la grille 15 selon une forme en Y. Le conduit d'air 13 est fixé sur l'un des bossages verticaux 21 disposé sur la face principale 5 de la platine 100, grâce à un plasti-rivet 14 et accoste en Y sur la grille 15. Le conduit d'air 13 assure ainsi un soufflage de l'air à l'intérieur de l'habitacle du véhicule. La grille 15 est clipsée sur les flasques latéraux de la console.

La figure 4 représente la face principale 5 de la platine 100 intégrant une interface de fixation nécessaire au maintien d'un conduit d'air 13 au plus près de la zone de soufflage s'effectuant sur la grille 15 clipsée sur les flasques latéraux de la console à l'intérieur de l'habitacle du véhicule. L'interface de fixation de la platine 100 permet au conduit d'air 13 d'adhérer à la grille 15 pour garantir une excellente prestation aéraulique en évitant toute perte d'air. En particulier, la perte d'air génère des sifflements qui peuvent être entendus par les passagers installés dans l'habitacle du véhicule. Une telle situation nuit au confort des passagers. Les conduits d'air 13 s'accostent en Y sur les grilles 15 permettant ainsi d'éviter tous sifflements et pertes d'air du système de ventilation liés à un mauvais accostage des conduits d'air courts 13 sur les grilles 15.

La figure 5 représente la grille 15 du système de ventilation clipsée sur les flasques latéraux de la console et permettant au conduit d'air court 13 d'envoyer de l'air à l'intérieur de l'habitacle du véhicule.

Grâce aux interfaces de fixation sur la platine selon l'invention, les conduits d'air courts adhèrent au plus près de la grille du système de ventilation, permettant de gérer toutes dispersions liées à l'accostage de conduits d'air sur une grille d'air intégrée aux flasques de console. L'invention permet donc d'éviter des problèmes liés au montage, aux remontées vibratoires et d'assurer une bonne prestation de ventilation en évitant des sifflements ou des dépressions.

Le système de fixation selon l'invention permet en outre une protection acoustique vis-à-vis du bruit provenant d'un ventilateur, d'une part en empêchant la diffusion directe du bruit, et d'autre part en permettant à l'air de s'écouler avec fluidité.

## Revendications

1. Habitacle de véhicule automobile , ledit habitacle comprenant :
- un système de ventilation comprenant,
- un conduit d'air (13) débouchant dans l'intérieur du véhicule au niveau des pieds des passagers du second rang,
- une grille (15),
- ledit habitacle comprenant une console, à l'intérieur du véhicule, comportant des flasques latéraux,
- ladite grille (15) étant intégrée aux flasques latéraux de la console et située au niveau des pieds des passagers du second rang à l'intérieur de l'habitacle du véhicule,
- - ledit conduit d'air (13) étant raccordé à ladite grille (15) et envoyant le flux d'air dans l'espace à l'intérieur du véhicule,
**caractérisé en ce que** l'habitacle de véhicule comprend une platine (100) qui intègre des interfaces de fixation dudit conduit d'air, lesdites interfaces de fixation dudit conduit d'air étant aptes à faire se raccorder de manière étanche ledit conduit d'air (13) avec ladite grille (15) à l'intérieur de la console ; le conduit d'air (13) s'accostant sur la grille (15).

2. Habitacle de véhicule selon la revendication 1, **caractérisé en ce que** ladite platine (100) est une pièce unique, rigide et moulée.

3. Habitacle de véhicule selon la revendication 2, **caractérisé en ce que** les interfaces de fixation de conduit d'air sont issues de matière de ladite platine (100).

4. Habitacle de véhicule selon l'une des revendications précédentes, **caractérisé en ce que** la forme de l'interface de fixation de conduit d'air est de type oblong.

5. Habitacle de véhicule selon l'une des revendications 1 à 3, **caractérisé en ce que** la forme de l'interface de fixation de conduit d'air est ronde.

6. Habitacle de véhicule selon l'une des revendications précédentes, **caractérisé en ce que** le conduit d'air (13) est rendu solidaire à ladite platine (100) par l'intermédiaire de moyens de solidarisation, lesdits moyens de solidarisation étant constitués de l'un quelconque au moins des moyens de solidarisation suivants : vis, écrou, cheville, attaches, plasti-rivet (14).

7. Habitacle de véhicule selon l'une des revendications précédentes, **caractérisé en ce que** les interfaces de fixation de conduit d'air sont intégrées à la console.

8. Véhicule automobile comprenant un habitacle de véhicule selon l'une des revendications précédentes.

## Patentansprüche

1. Fahrgastraum für ein Kraftfahrzeug, wobei der Fahrgastraum umfasst:
- ein Belüftungssystem, das
- einem Luftkanal (13), der in das Innere des Fahrzeugs an den Füßen der Fahrgäste zweiter Reihe mündet,
- einem Gitter (15),
- der Fahrgastraum mit einer Konsole innerhalb des Fahrzeugs, die Seitenwände aufweist,
- das Gitter (15) ist in die Seitenwände der Konsole integriert und befindet sich an den Füßen der Fahrgäste zweiter Reihe im Innenraum des Fahrzeugs.
- wobei der Luftkanal (13) mit dem Gitter (15) verbunden ist und den Luftstrom in den Raum innerhalb des Fahrzeugs leitet,
**dadurch gekennzeichnet, dass** der Fahrzeuginnenraum eine Platte (100) umfasst, die Befestigungsschnittstellen des Luftkanals integriert, wobei die Befestigungsschnittstellen des Luftkanals geeignet sind, den Luftkanal (13) mit dem Gitter (15) innerhalb der Konsole dicht zu verbinden, wobei der Luftkanal (13) an das Gitter (15) anschließt.

2. Fahrzeuginnenraum nach Anspruch 1, **dadurch gekennzeichnet, dass** die Platte (100) ein einziges, steifes und geformtes Teil ist.

3. Fahrzeuginnenraum nach Anspruch 2, **dadurch gekennzeichnet, dass** die Luftkanalbefestigungsgrenzflächen aus dem Material der Platte (100) hergestellt sind.

4. Fahrzeuginnenraum nach einem der vorhergehenden Ansprüche, **dadurch gekennzeichnet, dass** die Form der Luftkanalbefestigungsgrenzfläche länglich ist.

5. Fahrzeuginnenraum nach einem der Ansprüche 1 bis 3, **dadurch gekennzeichnet, dass** die Form der Luftkanalbefestigungsgrenzfläche rund ist.

6. Fahrzeuginnenraum nach einem der vorhergehenden Ansprüche, **dadurch gekennzeichnet, dass** der Kurzluftkanal (13) mit der Platine (100) über Verbindungsmittel fest verbunden ist, wobei die Verbindungsmittel aus mindestens einem der folgenden Verbindungsmittel bestehen: Schraube, Mutter, Dübel, Befestigungsmittel, Plasti-Niet (14).

7. Fahrzeuginnenraum nach einem der vorhergehenden Ansprüche, **dadurch gekennzeichnet, dass** die Luftkanalbefestigungsschnittstellen in die Konsole integriert sind.

8. Kraftfahrzeug mit einem Fahrzeuginnenraum nach einem der vorhergehenden Ansprüche.

## Claims

1. A passenger compartment for a motor vehicle, said compartment comprising:
- a ventilation system comprising,
- an air duct (13) leading into the interior of the vehicle at the feet of the passengers in the second row,
- a grid (15),
- said passenger compartment comprising a bracket, inside the vehicle, comprising lateral flanges,
- the grate (15) being integrated into the side flanges of the console and located at the feet of the second row passengers inside the passenger compartment of the vehicle,
- the air duct (13) being connected to the grate (15) and sending the air flow into the space inside the vehicle,
**characterized in that** the vehicle passenger compartment comprises a plate (100) which incorporates interfaces for fixing said air duct, said interfaces for fixing said air duct being capable of making said air duct (13) sealingly connected to said grate (15) inside the bracket; the air duct (13) being fitted on the grate (15).

2. Vehicle passenger compartment according to claim 1, **characterized in that** said plate (100) is a single, rigid and molded part.

3. A vehicle passenger compartment according to claim 2, **characterized in that** the air duct attachment interfaces are made of material of said plate (100).

4. Vehicle compartment according to one of the preceding claims, **characterized in that** the shape of the air duct attachment interface is of the elongate type.

5. Vehicle compartment according to one of Claims 1 to 3, **characterized in that** the shape of the air duct attachment interface is round.

6. Vehicle passenger compartment according to one of the preceding claims, **characterized in that** the short air duct (13) is secured to said plate (100) by means of securing means, said securing means being constituted by any one of at least the following securing means: screw, nut, pin, fasteners, rivet plate (14).

7. Vehicle compartment according to one of the preceding claims, **characterized in that** the air duct fixing interfaces are integrated into the bracket.

8. Motor vehicle comprising a vehicle compartment according to one of the preceding claims.
